Europäisches Patentamt

European Patent Office

Office européen des brevets

(11) Publication number: **0 373 926**
**A1**

(19)

## EUROPEAN PATENT APPLICATION

(21) Application number: 89313065.8

(22) Date of filing: 14.12.89

(51) Int. Cl.⁵: **F16B 3/00, F16B 21/10,**
**A45C 13/26**

(30) Priority: 14.12.88 GB 8829191

(43) Date of publication of application:
**20.06.90 Bulletin 90/25**

(84) Designated Contracting States:
**DE FR IT NL**

(71) Applicant: **PAUL NORMAN PLASTICS LIMITED**
**Unit S5 Inchbrook Trading Estate Bath Road**
**Woodchester Gloucestershire GL5 5EY(GB)**

(72) Inventor: **Norman, Paul Parfitt**
**Robin Hill 65 Bownham Park Rodborough**
**Stroud Gloucestershire GL5 5BZ(GB)**
Inventor: **Bushell, Andrew**
**Bliss Mill Cottage Chalford**
**Stroud Gloucestershire GL6 8NS(GB)**

(74) Representative: **Nash, David Allan et al**
**Haseltine Lake & Co. 28 Southampton**
**Buildings Chancery Lane**
**London WC2A 1AT(GB)**

(54) **A fixing device.**

(57) There is provided a fixing device comprising:
a first part (1) having a base portion (4) from which project a first lug (3) and a second lug (3) between which there is defined a gap, at least one of the lugs (3) being capable of flexing away from the other lug (3) to increase the gap between them; and
a second part (2) having a body portion (7) including a tongue (8) which is capable of being introduced and retained in the gap between the first and second lugs (3), said tongue (8) comprising an enlarged region (10) capable, on translational introduction into the gap between the lugs (3) of flexing at least one lug (3) away from the other lug (3) and, adjacent the enlarged region (10), a restricted neck (12) which, following introduction of the enlarged region (10) between the lugs (3), enables the lug (3) or lugs (3) to relax fully or partially whereby the tongue of the second part (2) is translationally captured between the lugs (3).
Also disclosed is an embodiment in which the tongue flexes rather than the lugs.

Figure 1

## A FIXING DEVICE

This invention relates to a fixing device and is more particularly concerned with a two-part fixing device which can be, but need not be, quickly and reliably attached to an intermediate element.

Our European patent application published under the Serial No. 0190029 relates to a fixing device comprising:
a first part which includes a projecting lug having an enlarged region; and
a second part provided with an elongate channel capable of accommodating the enlarged region of the lug, the second part including an inclined portion which partially defines the channel; wherein the channel has an opening to permit the enlarged region of the lug to enter the channel, and the inclined portion is disposed such that, in use, as the first and second parts are moved translationally with respect to each other and with the enlarged region of the lug moving along the channel, the enlarged region of the lug abuts the inclined portion of the second part so as to tend to urge the first and second parts together.

Whilst the fixing device described in our European patent application works admirably, and is particularly well adapted to securing together a variable number of intermediate elements owing to the presence of the inclined portion, there is a need for an even simpler and cheaper mechanism which is suited to an intermediate element or elements of a predetermined thickness.

Thus, in accordance with a first aspect of the present invention, there is provided a fixing device comprising:
a first part having a base portion from which project a first lug and a second lug between which there is defined a gap, at least one of the lugs being capable of flexing away from the other lug to increase the gap between them; and
a second part having a body portion including a tongue which is capable of being introduced and retained in the gap between the first and second lugs, said tongue comprising an enlarged region capable, on translational introduction into the gap between the lugs, of flexing the at least one lug away from the other lug and, adjacent the enlarged region, a restricted neck which, following introduction of the enlarged region between the lugs, enables the lug or lugs to relax fully or partially whereby the tongue of the second part is translationally captured between the lugs.

According to a second aspect of the present invention, there is provided a fixing device comprising:
a first part having a base portion from which project a first lug and a second lug between which there is a defined a gap; and
a second part having a body portion including a tongue which is capable of being translationally introduced into and retained in the gap between the first and second lugs, said tongue comprising an enlarged region having a width greater than the width of the gap between the lugs and, adjacent the enlarged region, a restricted neck, said tongue being capable of distorting to permit translational movement of the tongue through the gap and relaxing partially or fully when the restricted neck is in the gap between the lugs whereby the tongue of the first part is translationally captured between the lugs.

It will be appreciated that a fixing device combining both aspects of this invention could be provided in which both lugs flex and tongue distorts.

Preferably, the first and second parts comprise cooperating means which, when the two parts are engaged, capture the parts in the direction generally parallel to the lugs. The cooperating means preferably comprise at least one flattened base portion formed in the second part and a cooperating slot in a lug of the first part in which the flattened base portion of the second part engages. More preferably, each of the lugs includes a slot and the second part preferably includes two oppositely disposed flattened base portions to cooperate with the said two slots.

The lugs are preferably circularly cylindrical, apart from any cooperating means for holding the first and second parts in a direction parallel to the lugs.

When the lugs are circularly cylindrical in shape, the slot preferably extends half way across the lug which makes the slot roughly semi-circular in cross-section. Projecting from one or other of the ends of this slot may be a short projection which, when the flattened base portion is engaged in the slot, bears on that flattened portion to hold it steady. The end of the slot nearer the base portion of the first part should be spaced from the base portion such that, when the first and second parts are engaged, there is a gap between the two parts which can accommodate the thickness of an intermediate element captured between the two parts.

Preferably, the tongue tapers from the enlarged region to its free end to ease initial lateral movement of the first and second parts together.

The lugs of the first part should be made from a resilient material, and, in preferred embodiments of this invention, the whole of the first part is made of a plastics material such as nylon. Although the second part could be made of the same material as the first part, this is not essential and the second part could be made of a cheaper plastics material than the first part, such as polypropylene.

If the tongue is to distort, for example by bending out of its normal plane or by deforming, it should be made of a material, for instance a plastics material, which is very much more flexible than the material from which the first part is made.

For a better understanding of the present invention and to show how the same may be carried into effect, reference will now be made, by way of example only, to the accompanying drawings in which:

Figure 1 shows one embodiment of a fixing device according to the present invention, in the form of one component of a two component clip;

Figure 2 shows another embodiment of a fixing device according to the present invention, including the other component of the two component clip of which the first component is shown in Figure 1;

Figure 3 shows a further embodiment of the fixing device of the present invention, as the handle of a brief case;

Figure 4 shows the handle of a brief case attached to the main carrying part of the brief case; and

Figure 5 shows yet a further embodiment of the fixing device of the present invention, as a hinge.

This invention is described in relation to the first embodiment identified above; it is, however, to be appreciated that the second embodiment could be constructed in a similar way, albeit with the flexibility in the second part and not the first part.

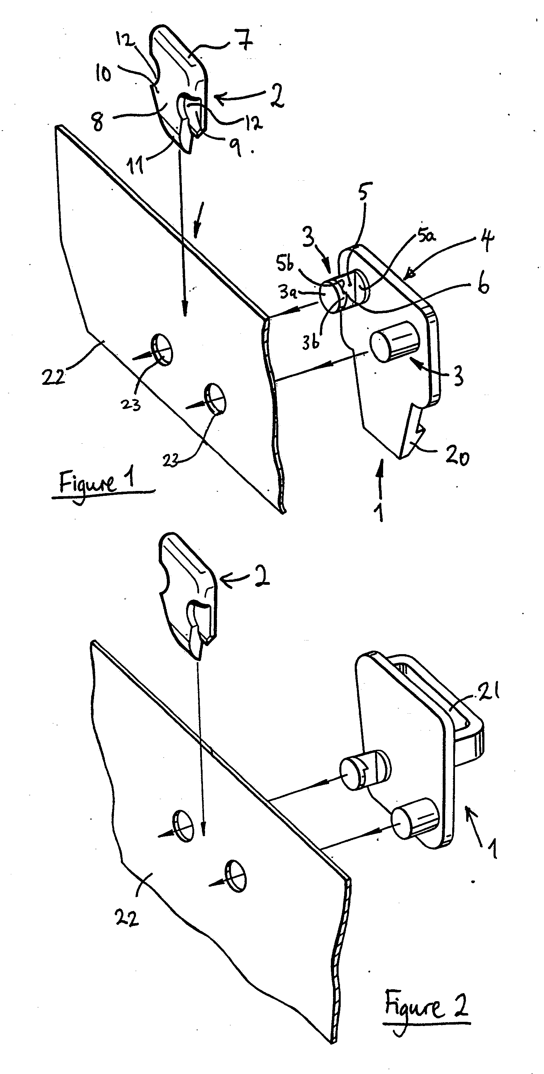

With reference to Figure 1, a two part fixing device comprises a first part 1 and a second part 2. The first part 1 is provided with first and second lugs 3 which project generally perpendicular from a base 4. Each lug 3 is generally of a cylindrical nature having a circular cross-section; however, each lug (although only visible on one of the lugs 3 shown in Figure 1) is provided with a slot 5 of a generally semi-circular cross-section. The slots 5 have planar ends 5a and 5b, the planar ends 5b being spaced from the surface of the base 4. Projecting into the slot 5 from the end 5b of the slot is a small projection 6 which, in the embodiment shown in Figure 1, takes the form of a slightly sloping wall from one edge of the slot. However, this projection 6 could simply be a free standing ridge. The top, or free end, of each lug 3 forms an enlarged region 3a having a cylindrical surface 3b.

The second part 2 has a body 7 from which projects a tongue 8. To either side of the tongue 8 extend flattened base portions 9 (only one shown). The tongue 8 has an enlarged part 10 which tapers towards its free end 11. Between the enlarged part 10 of the tongue and the body portion 7 is defined a recess 12 either side of the tongue 8. These recesses have generally part-circular walls adapted to cooperate with the part-circular surface 3b of the lugs 3.

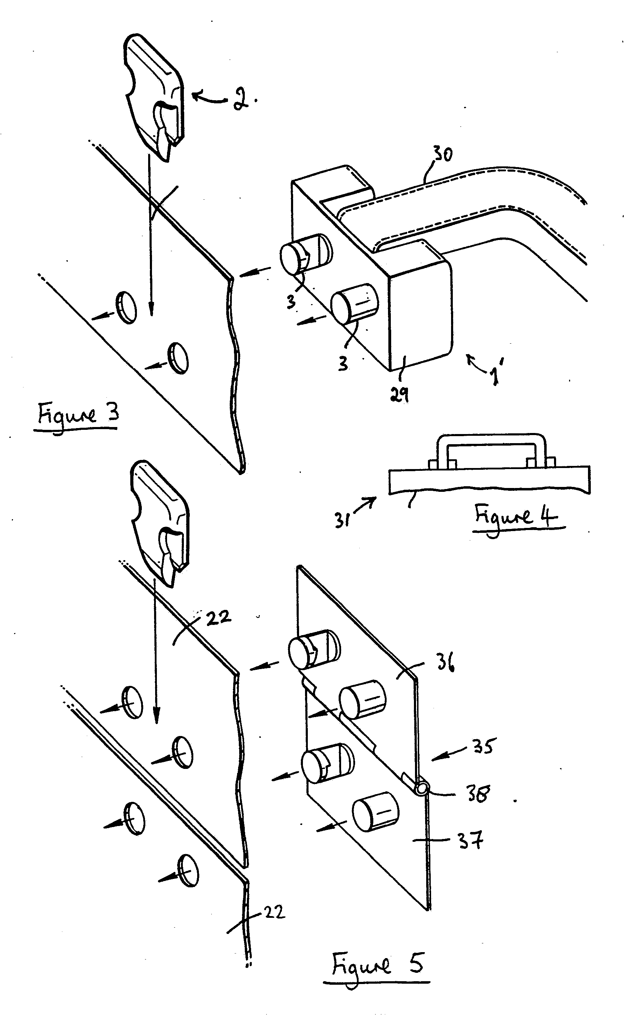

As shown in Figure 1, the first part 1 is provided with a male clip portion 20 which is adapted to engage a female portion 21 defining a hoop into which the male portion 20 releasably projects. Each of the first parts shown in Figures 1 and 2 are held to an intermediate element 22 having two spaced holes 23 by a respective second part 2.

In Figure 3, the first part 1' comprises one side of a handle 30 of a brief case 31 shown in Figure 4. The second part 2 is identical to the second parts 2 shown in Figures 1 and 2.

In Figure 5, the application of the fixing device according to the present invention as a hinge is shown. The hinge 35 possesses two elements 36 and 37 each of which corresponds to a first part of a fixing device according to the present invention and as described above in relation to Figures 1 and 2. The elements 36 and 37 are rotatable about an axis 38 of the hinge 35. Each of the elements 36 and 37 is fixed to an intermediate element 22 by a second part 2 as shown and described in relation to Figure 1. The hinge is quick and easy to use and is very strong.

Engagement of the two parts of the fixing device according to the present invention is achieved as follows and is described in particular in relation to Figure 1. Firstly, the lugs 3 of the first part 1 are caused to project through the holes 23 in the intermediate element 22 to which the fixing device is to be attached. The thickness of the intermediate element roughly corresponds to the distance between the end 5a of the slot and the surface of the base 4 from which the lugs project. Thus, the end 5a of the slot will be at approximately the same level as the open surface of the intermediate element 22. The second part is then caused to move translationally (from either direction, although only one direction is shown in Figure 1) through the gap between the lugs 3 so that first the free end of the tongue 11 enters the gap between the two lugs 3. As the tongue 8 is pushed further through the gap between the lugs 3, the enlarged region 10 bears against the surfaces 3b of the lugs 3 and causes the lugs 3 to flex apart. Once the enlarged region 10 has passed through the gap, the lugs may flex back together again as the restricted neck region defined between the recesses 12 is reached. This causes the two parts to be secured in a lateral direction. Moreover, the parts are also secured in a direction parallel to the lugs by virtue of the flattened base portions 9 being captured in the slots 5, and stabilised there by the projections 6.

## Claims

1. A a fixing device comprising:

a first part having a base portion from which project a first lug and a second lug between which there is defined a gap, at least one of the lugs being capable of flexing away from the other lug to increase the gap between them; and

a second part having a body portion including a tongue which is capable of being introduced and retained in the gap between the first and second lugs, said tongue comprising an enlarged region capable, on translational introduction into the gap between the lugs, of flexing the at least one lug away from the other lug and, adjacent the enlarged region, a restricted neck which, following introduction of the enlarged region between the lugs, enables the lug or lugs to relax fully or partially whereby the tongue of the second part is translationally captured between the lugs.

2. A fixing device comprising:

a first part having a base portion from which project a first lug and a second lug between which there is a defined a gap; and

a second part having a body portion including a tongue which is capable of being translationally introduced into and retained in the gap between the first and second lugs, said tongue comprising an enlarged region having a width greater than the width of the gap between the lugs and, adjacent the enlarged region, a restricted neck, said tongue being capable of distorting to permit translational movement of the tongue through the gap and relaxing partially or fully when the restricted neck is in the gap between the lugs whereby the tongue of the first part is translationally captured between the lugs.

3. A fixing device according to claim 1 or 2, wherein the first and second parts comprise cooperating means which, when the two parts are engaged, capture the parts in a direction generally parallel to the lugs.

4. A fixing device according to claim 3, wherein the cooperating means comprise at least one flattened base portion formed in the second part and a cooperating slot in a lug of the first part in which the flattened base portion of the second part engages.

5. A fixing device according to claim 4, wherein each of the lugs includes a slot and the second part includes two oppositely disposed base portions to cooperate with the said two slots.

6. A fixing device according to claim 4 or 5, wherein the lugs are circularly cylindrical, apart from any cooperating means for holding the first and second parts in a direction parallel to the lugs.

7. A fixing device according to any one of claims 4 to 6, wherein the lugs are circularly cylindrical in shape, and the slot extends about half way across the lug, thereby making the slot approximately semi-circular in cross section.

8. A fixing device according to any one of claims 4 to 7, wherein a short projection projects from one or other of the ends of the slot such that, when the flattened base portion is engaged in the slot, the short projection bears on the flattened portion to hold it steady.

9. A fixing device according to any one of claims 4 to 8, wherein the end of the slot nearer the base portion of the first part is spaced from the base portion such that, when the first and second parts are engaged, there is a gap between the two parts which can accommodate the thickness of an intermediate element captured between the two parts.

10. A fixing device according to any preceding claim, wherein the tongue tapers from the enlarged region to its free end to ease initial lateral movement of the first and second parts together.

EP 0 373 926 A1

Figure 1

Figure 2

Figure 3

Figure 4

Figure 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP-A-0 190 029  (PAUL NORMAN) <br> * Page 10, line 14 - page 12, line 24; figures 1-5 * <br> --- | 1-3 | F 16 B    3/00 <br> F 16 B   21/10 <br> A 45 C   13/26 |
| Y | US-A-2 999 412  (J.E. MARTENS) <br> * Whole document * <br> --- | 1-3 | |
| A | DE-A-3 641 163  (R. MAXEINER) <br> * Column 3, line 49 - column 4, line 66; figures 1-3 * <br> --- | 1 | |
| A | DE-B-1 959 166  (C. NASKE) <br> ----- | | |

TECHNICAL FIELDS SEARCHED (Int. Cl.5)

F 16 B
A 45 C

The present search report has been drawn up for all claims

| Place of search | Date of completion of the search | Examiner |
|---|---|---|
| THE HAGUE | 28-03-1990 | ARESO Y SALINAS J. |